# EUROPEAN PATENT APPLICATION

(11) **EP 4 350 302 A2**
(43) Date of publication of application: **10.04.2024**
(21) Application number: 24157394.8
(22) Date of filing: 21.01.2020
(51) Int. Cl.: G01D 5/26

(54) **FLUORESCENCE TIME DECAY SENSING APPARATUS AND METHODS OF MANUFACTURING SAME**

(30) Priority: 01.03.2019 US 201962812843 P
(62) Divisional of application: 20766222.2
(71) Applicant: James, Daryl, Coquitlam BC V3J 4Z9 (CA); Balaji, Sharada, Coquitlam BC V3J 4Z9 (CA); Reeves, Nicholas, Coquitlam, BC V3J 4Z9 (CA)
(72) Inventor: James, Daryl, Coquitlam BC V3J 4Z9 (CA); Balaji, Sharada, Coquitlam BC V3J 4Z9 (CA); Reeves, Nicholas, Coquitlam, BC V3J 4Z9 (CA)
(74) Representative: Purdylucey Intellectual Property

(57) **Abstract**

A method of manufacturing a plurality of apparatuses by fine tuning the time-decay versus temperature response of a batch of fluorescent temperature sensor material.

## Description

### FIELD

The present technology relates to a temperature probe capable of accurately sensing temperatures using a nanocomposite fluorescent material for use in phosphor thermometry. More specifically, it is a method of manufacturing a nanocomposite material that results in polycrystalline sensing elements and a fluorescence temperature sensor that includes the polycrystalline sensing element.

### BACKGROUND

### Fluorescent temperature sensors:

Fluorescence can be very simply defined as the emission of light when a material is exposed to electromagnetic radiation. This emission may continue for a period of time after the initial excitation. The length of time that a material will emit is a product of several interactions that occur at the atomic level and the amount of energy that is absorbed. Both excitation and emission intensities behave exponentially with respect to time. This dual time-dependent behavior is a unique property that can be used to indicate the temperature of the fluorescent material.

Fluorescent temperature sensors utilize the proportional relationship between the luminous time-decay of a phosphor and the temperature at which it is being held. For a fiber optic temperature sensor, an excitation light pulse is coupled into an optical fiber at one end and travels down the fiber and excites a fluorescent material at the other end. The excited light couples back into the same fiber and travels back toward the light source and is split off to a photodetector which produces an electrical signal that can be analyzed. The luminous intensity of the phosphor is thereby analyzed over a period of time and its time-decay constant is determined. This time-decay constant is then compared in a lookup table to known time-decay values for different reference temperatures. In this way, the time-decay is converted to temperature and the phosphor on the end of the fiber acts as the sensor element.

### Fluorescent sensing materials:

Phosphor powders may be used for sensing temperature when affixed to the end of an optical fiber or attached to a target substrate. Phosphor powders in loose form, however, are unstable and unable to provide accurate temperature readings. The powders may be strengthened and stabilized by mixing them with a liquid binder, such as an epoxy before being applied to the end of an optical fiber and cured.

The binding of the phosphor powder in a solid matrix improves its stability with respect to hysteresis effects from thermal cycling and also protects the phosphor from external influences that may change over time such as the presence of moisture and various gas concentrations in the surrounding atmosphere which interact with the phosphor powder and affect its time-decay properties.

Process variations in the production of different batches of phosphor powder result in powders which have the same chemical composition but respond with different time-decay values for the same control temperature. Some of this variation is a result of particle size differences, minute dopant concentration differences, variations in the sintering and grinding processes, presence of impurities, phosphor particle density and microstructure absorption and scattering properties.

### Higher temperature fluorescent sensors:

The addition of a binder material to the phosphor powder works well in lower temperature regimes (below 250°C) because there are numerous optically transparent organic binder materials to choose from such as epoxy resins, silicones, and thermoplastics. At higher temperatures, however, these organic binders oxidize and contaminate the phosphor resulting in lower signal levels and a shift in time-decay response. It is therefore desirable to use an inorganic binder. Various liquid inorganic binders have been suggested including sodium silicate, HPC, LK, and ZAP manufactured by Zyp Coatings, Oak Ridge TN. While these materials can withstand higher temperatures, they all suffer from one or more of the following deficiencies:
a) Chemical inertness - they may react to moisture, oxygen or other gasses in the environment which shifts the time-decay behavior of the phosphor matrix.
b) Mechanical weakness - they are weak bonding agents and result in a phosphor matrix that easily cracks and does not adhere well to a substrate.
c) Phase transitions - sodium silicate, for example, undergoes a phase transition from glass to crystalline structure which is partially reversible in the presence of moisture and therefore introduces significant hysteresis in time-decay behavior.
d) Organic additives - many high temperature binder solutions contain organic solvents or other organic additives which burn off at elevated temperatures but leave contaminants which degrade the optical signal and contribute to hysteresis behavior.
e) Dehydration - most binder solutions contain water which must be driven off slowly in order to cure. The result is a porous physical structure with density variations that produce weaker optical signals and different time-decay responses.
f) Moisture re-absorption - The water absorption properties of silicate binders in particular contributes to hysteresis and shifts the time-decay response of the phosphor matrix significantly at temperatures below 100°C.

Various solid crystal fluorescent materials have been proposed for time-decay temperature sensing at high temperatures above 350 °C. Such crystals include Y₂O₃ [yttria], Y₃Al₅O₁₂ [yttrium aluminum garnet or YAG], YAlO₃ [yttrium aluminum perovskite or YAP], and Al₂O₃ [sapphire] doped with one or more rare earth element. For example, a sensor may be fabricated from a YAG light guide with YAG-Er [erbium] grown on the end (US Pat 6045259). One advantage of this type of sensor is its use for extreme temperature applications exceeding 700 °C.

This type of sensor, however, suffers from the following disadvantages:
1. Time consuming and costly to grow the YAG light guide.
2. Time consuming and costly to grow the YAG-Er crystal.
3. The crystal can develop color centers due to ion charge migration and suffers from hysteresis.

United States Patent 8,123,403 discloses a temperature sensor probe that can conduct stable measurements, and the manufacturing method of the same. The temperature sensor probe provides: a fluorescent material that is a mixture of a fluorescent substance and a transparent material; a thermosensitive part having a concave part in which the fluorescent material is arranged; a waveguide route rod that propagates excitation light, which is irradiated on the fluorescent material, and fluorescent light, which is produced by the fluorescent substance; and a protective tube that covers the side surfaces of the waveguide route rod. Then, the fluorescent material is affixed to the tip of the waveguide route rod using the transparent material, and the waveguide route rod bites into the fluorescent material. The fluorescence sensor is not polycrystalline nor is it a solidified sintered sensor. The method does not include a step that would produce a polycrystalline sensor element. The disclosed sensor relies on a concave part to house a mixture of a fluorescent material and transparent material, and a waveguide route member that bites into the sensor material and an undescribed process of "sintering" to affix the waveguide to the fluorescent material.

United States Patent 9,599,518 discloses a fiber optic temperature sensing system incorporating a thermal probe which utilizes a phosphor in the form of a microsphere. The microsphere is situated in air so as to produce a lensing effect in both coupling the excitation light delivered to it by the fiber and coupling the fluorescence produced by the phosphor microsphere back into the fiber. The thermal probe can be implemented in either a flexible or a rigid form. Materials for the phosphor microspheres include--but are not limited to--rare earth(s) doped single crystals, rare earth(s) doped ceramics, and ruby. When coupled to a suitable controller, these thermal probes can provide reliable temperature measurements even in environments characterized by strong electrical noise or electromagnetic interference. The fluorescence sensor is not sintered, nor is it polycrystalline nor is it a solidified sintered sensor.

While the technology of 9,599,518 permits the growth of bulk YAG crystal material, and somewhat reduces the cost of fabrication, the optical signals are weak, and resolution and accuracy are poor because:
1. The microsphere is small, matching that of the fiber;
2. Excitation light travels through the microsphere and is not absorbed well by the microsphere with most of the excitation light escaping and very little of the fluorescent light coupling back into the fiber; and
3. Mechanical challenge of affixing a microsphere to the end of an optical fiber such that it does not shift around. Even a small shift results in changes in fluorescent signal and can affect the time-decay characteristics.

United States Patent 6,045,259 discloses a crystalline structure, comprising an optical waveguiding region, a crystalline fluorescent temperature sensing region, and a crystalline junction between the optical waveguiding region and the crystalline fluorescent temperature sensing region. An embodiment of the present invention is a novel fiber-optic temperature sensor functional under high-temperature conditions. The fiber-optic temperature sensor comprises a continuous crystalline fiber optic high temperature sensor probe having a crystalline optical waveguiding region with first and second ends, and a crystalline fluorescent temperature sensing tip at one end thereof. The crystalline optical waveguiding region and the crystalline fluorescent temperature sensing tip are preferably crystallographically and thermomechanically compatible with each other. The fluorescent temperature sensing tip contains fluorescent ions that can be excited to fluoresce and produce a fluorescence emission. The fiber optic high temperature sensor probe also contains a crystalline junction preferably having a continuous, crystalline structure throughout. The crystalline junction is located between, and attached to, the crystalline fluorescent temperature sensing tip and the first end of the crystalline optical waveguiding region such that, preferably, a continuous, crystalline fiber optic high temperature sensor probe is formed. The fluorescence sensor is not sintered, nor is it polycrystalline nor is it a solidified sintered sensor.

United States Patent 9,537,047 discloses a method for fabricating an LED/phosphor structure where an array of blue light emitting diode (LED) dies are mounted on a submount wafer. A phosphor powder is mixed with an organic polymer filler, such as an acrylate or nitrocellulose. The liquid or paste mixture is then deposited over the LED dies or other substrate as a substantially uniform layer. The organic filler is then removed by being burned away in air or being subject to an O.sub.2 plasma process, or dissolved, leaving a porous layer of phosphor grains sintered together. The porous phosphor layer is impregnated with a sol-gel (e.g., a sol-gel of TEOS or MTMS) or liquid glass (e.g., sodium silicate or potassium silicate), also known as water glass, which saturates the porous structure. The structure is then heated to cure the inorganic glass filler, leaving a robust glass filler that resists yellowing, among other desirable properties. The fluorescence element is an LED phosphor coating. It is not polycrystalline nor is it a solidified sintered sensor. The method does not include a step that would produce a polycrystalline or solidified sintered sensor.

United States Patent 9,434,876 discloses a phosphor-dispersed glass, including: a glass material; and a phosphor dispersed in the glass material, wherein the glass material is substantially free of Nb₂O₅ and contains: 15 to 40 mass % of SiO₂; 10 to 30 mass % of B₂O₃; 1 to 35 mass % of ZnO; 0 to 20 mass % of Al₂O₃; 2 to 30 mass % in total of at least one kind selected from the group consisting of BaO, CaO and SrO; 0 to 1 mass % of MgO; 5 to 35 mass % in total of R₂O (at least one selected from the group consisting of Li₂O, Na₂O and K₂O); and 0 to 15 mass % in total of at least one of antimony oxide and tin oxide. The fluorescence sensor is not polycrystalline nor is it solidified sintered sensor. The method does not include a step that would produce a polycrystalline or solidified sintered sensor.

United States Patent 4,652,143 discloses an optical temperature measurement technique that utilizes the decaying luminescent intensity characteristic of a sensor composed of a luminescent material that is excited to luminescence by a light pulse or other periodic or other intermittent source of radiation. The luminescent emissions of a preferred sensor exhibit an approximately exponential decay with time that is the average of a distribution of chemically reproducible crystallites and are repeatable with a high degree of accuracy regardless of excitation level or prior temperature history of the sensor. The fluorescence sensor is not sintered, nor is it polycrystalline nor is it a solidified sintered sensor.

United States Patent 7,374,335 discloses a luminescent temperature sensor comprising (i) an object having a recess, (ii) a layer of luminescent material disposed in the recess, wherein the luminescent material emits electromagnetic radiation having a detectable optical characteristic that is functionally dependent on the temperature of the object, and (iii) a light waveguide in optical communication with the layer of luminescent material, is provided. A test device for measuring a temperature in a processing step comprising (i) an object having a surface and having a recess in the surface of the object, (ii) a layer of luminescent material disposed in the recess, wherein the luminescent material emits electromagnetic radiation having a detectable optical characteristic that is functionally dependent on the temperature of the object in response to a source of excitation radiation, and (iii) an optical window that seals said layer of luminescent material in the recess in the surface of the object, is provided. The fluorescence sensor is not sintered, nor is it polycrystalline nor is it a solidified sintered sensor.

Ogi et al. (ECS Journal of Solid State Science and Technology,2(5) R91-R95 (2013) Optical Materials Vo. 75, pp 814-820) discloses that rare-earth-doped yttrium aluminum garnet (YAG:RE) phosphors have good photoluminescence (PL) properties and are widely used in light-emitting diodes. However, the RE elements used in these phosphors are expensive and in short supply. It is therefore important to develop phosphors that contain smaller amounts of RE materials. One strategy is to produce nanocomposite phosphors in which a cheaper and more readily available material is used as a matrix for a RE oxide. In this study, they produced a YAG:Ce/SiO₂ nanocomposite using a sol-gel method; polyethylene glycol) and urea were added to promote micelle formation and agglomeration, respectively. The nanocomposites were characterized using X-ray diffraction, scanning and transmission electron microscopies (TEM), and energy-dispersive X-ray spectroscopy. They determined the concentration of SiO₂ that provided maximum PL enhancement, and used geometrical models as well as the characterization results to propose an explanation for this enhancement. Their results showed that an SiO₂ concentration of 10 vol% provided a PL intensity 120% that of pure YAG:Ce. TEM analysis showed that SiO₂ nanoparticles covered the voids between the single grain boundaries of the YAG:Ce crystals, thereby inhibiting light scattering, resulting in enhanced PL. This method will be useful for large-scale synthesis of low-RE, high-PL phosphors. A sol-gel process was used to synthesize the phosphors. The phosphors are not sintered, nor are they polycrystalline.

What is needed is a method of manufacturing a nanocomposite fluorescent material for higher temperature applications, a method of producing multiple sensor elements with substantially the same accuracy, and a method for adjusting a fluorescent material time-decay response. It would be preferable if the nanocomposite fluorescent material could be used in a high temperature fluorescent sensor and would improve the optical signal of the high temperature fluorescent sensor. Furthermore, it would be preferable if the nanocomposite fluorescent material was high density and was stable and accurate over time with minimal hysteresis in its time-decay versus temperature response.

### SUMMARY

The present technology provides a method of manufacturing a nanocomposite fluorescent material for higher temperature applications, a method of producing multiple sensor elements with substantially the same accuracy and a method for adjusting a fluorescent material's time-decay response. The method utilizes high pressure prior to high temperature sintering to produce polycrystalline sensing elements. The polycrystalline nanocomposite fluorescent material can be used in a high temperature fluorescent sensor and improves the optical signal of the high temperature fluorescent sensor. The polycrystalline nanocomposite fluorescent material is high density and is stable and accurate over time with minimal hysteresis in its time-decay versus temperature response. It is also brighter and more stable with respect to time-decay at elevated temperatures and is therefore well suited as a sensor material for phosphor thermometry.

In an unclaimed embodiment, a fluorescence sensor for use in phosphor thermometry is provided, the sensor comprising: an optical light guide which includes a distal end; and a sensing element which includes a proximal end and an outer surface, the proximal end of the sensing element attached to the distal end or located proximate to the distal end, the sensing element comprising one of a monocrystalline solid, a polycrystalline solid or a polycrystalline nanocomposite.

In an unclaimed embodiment, the fluorescence sensor the sensing element may be a nanocomposite with a solid density of greater than about 90% or is a polycrystalline solid with a solid density of greater than about 90%.

In the fluorescence sensor the polycrystalline nanocomposite may include at least one host, at least one dopant and at least one filler.

In the fluorescence sensor, the sensing element may be attached to the distal end of the optical light guide.

The fluorescence sensor may further comprise a glass bond between the distal end of the optical light guide and the sensing element.

In the fluorescence sensor, the optical light guide may be an optical fiber.

In the fluorescence sensor, the host may be at least one of YSO, YSZ, Y₂O₃, YVO₄, YAG, YAP, YAM, YGG, Al₂O₃, La₂O₂S, Gd₂O₂S, Mg₂TiO₄, 3.5MgO 0.5MgF₂ GeO₂, Mg₄FGeO₆ and K₂SiF₆.

In the fluorescence sensor, the dopant may be at least one of Ce, Cr, Dy, Er, Eu, Gd, Ho, Mn, Nd, Pr, Sm, Tb, Ti and Yb.

In the fluorescence sensor, the filler may be at least one of silica, glass, borosilicate glass, diamond, and undoped host.

In the fluorescence sensor, the undoped host may be YSO, YSZ, Y₂O₃, YVO4, YAG, YGG, YAP, YAM, Al₂O₃, La₂O₂S, Gd₂O₂S, MgO, GeO₂, TiO₂, SiO₂ and MgF₂.

In the fluorescence sensor, the filler may be silicon dioxide.

In the fluorescence sensor, the silicon dioxide concentration may be about 0.1% to 10% w/w.

In the fluorescence sensor, the silicon dioxide may be doped with at least one of Ce, Cr, Dy, Er, Eu, Gd, Ho, Mn, Nd, Pr, Sm, Tb, Ti and Yb.

The fluorescence sensor may further comprise a protective sheath in which at least the sensing element is housed.

In an unclaimed embodiment, polycrystalline nanocomposite for use in fluorescence time-decay sensing is provided, the polycrystalline nanocomposite comprising a mixture of at least one host, at least one dopant and at least one filler.

In an unclaimed embodiment, a polycrystalline nanocomposite for use in fluorescence time-decay sensing is provided, the polycrystalline nanocomposite comprising a mixture of at least one host, at least one dopant and at least one filler, wherein the mixture is compacted under a high pressure of at least about 5 tons per square inch.

In the polycrystalline nanocomposite, the polycrystalline nanocomposite may be sintered.

In the polycrystalline nanocomposite, the host may be at least one of YSO, YSZ, Y₂O₃, YVO₄, YAG, YAP, YAM, YGG, Al₂O₃, La₂O₂S, Gd₂O₂S, Mg₂TiO₄, 3.5MgO 0.5MgF₂GeO₂, Mg₄FGeO₆ and K₂SiF₆.

In the polycrystalline nanocomposite, the dopant may be at least one of Ce, Cr, Dy, Er, Eu, Gd, Ho, Mn, Nd, Pr, Sm, Tb, Ti and Yb.

In the polycrystalline nanocomposite, the filler may be at least one of silica, glass, borosilicate glass, diamond and undoped host.

In the polycrystalline nanocomposite the undoped host may be at least one of YSO, YSZ, Y₂O₃, YVO4, YAG, YGG, YAP, YAM, Al₂O₃, La₂O₂S, Gd₂O₂S, MgO, GeO₂, TiO₂, SiO₂ and MgF₂.

In the polycrystalline nanocomposite, the filler may be silicon dioxide.

In the polycrystalline nanocomposite, the silicon dioxide concentration may be about 0.01% to 10% w/w.

In the polycrystalline nanocomposite, the silicon dioxide may be doped with at least one of Ce, Cr, Dy, Er, Eu, Gd, Ho, Mn, Nd, Pr, Sm, Tb, Ti and Yb.

In an unclaimed embodiment, a method of manufacturing a polycrystalline nanocomposite fluorescent solid is provided, the method comprising:
preparing a phosphor powder by doping at least one host with at least one dopant;
mixing at least one filler with the phosphor powder to provide a phosphor and filler mixture;
compacting the mixture under a pressure of at least about 5 tons per square inch to provide a solid or a near solid matrix; and sintering the solid or the near solid matrix in a controlled atmosphere to provide a polycrystalline nanocomposite fluorescent solid.

In the method, the at least one filler may be SiO₂ nanoparticles.

The method may further comprise grinding the polycrystalline nanocomposite fluorescent solid into a powder of a substantially uniform particle size.

The method may further comprise machining the polycrystalline nanocomposite fluorescent solid into sensing elements.

In an embodiment of the invention, there is provided a method of manufacturing a plurality of apparatuses by fine tuning the time-decay versus temperature response of a batch of fluorescent temperature sensor material is provided, the method comprising:
providing a predetermined accuracy bin value;
mixing a batch of the fluorescent temperature sensor materials;
acquiring samples from the batch;
solidifying the samples;
testing the samples by recording the time-decay response at a reference temperature;
comparing the time-decay response for each of the samples with the predetermined accuracy bin value;
determining whether a majority of the samples fall within the predetermined accuracy bin value;
if a majority of the samples do not fall within the predetermined accuracy bin value adjusting the batch materials based on the test results by adding more materials to the batch and mixing it to provide a new batch;
acquiring new samples from the new batch;
solidifying the new samples;
testing the new samples in order to determine bin values for each of the new samples;
comparing the bin values for each of the new samples with the predetermined accuracy bin value;
determining whether a majority of the new samples would fall within the predetermined accuracy bin value;
if a majority of the new samples do not fall within the predetermined accuracy bin value, further adjusting the batch materials based on the test results by adding more materials to the batch and mixing it;
repeating the above steps until a majority of the new samples fall within the predetermined accuracy bin value; and
solidifying a whole batch when the majority of the test samples fall within the predetermined accuracy bin value.
In the method, the step of adjusting the batch materials may comprise one or more of adding a filler material to the phosphor powder;
or adding a second batch of phosphor powder with a different dopant concentration;
or adding a second batch of phosphor powder with a different particle size to the original phosphor powder.

In the method, the step of adjusting the batch materials may comprise adding one or more of the following materials to the batch:
a phosphor powder of the same chemical composition with a larger particle size;
a phosphor powder of the same chemical composition with a smaller particle;
a filler material;
a phosphor powder of the same bulk chemical composition but with a higher dopant concentration;
and a phosphor powder of the same chemical composition but with a lower dopant concentration.

In the fluorescence sensor, the optical light guide may comprise a bundle of optical fibers.

In the fluorescence sensor, the proximal end of the sensing element may be polished.

In the fluorescence sensor, the outer surface of the sensing element may be ground.

In the fluorescence sensor, the outer surface may be reflective surface.

The fluorescence sensor may further comprise a sensor cap, the sensor cap housing the sensing element.

In the fluorescence sensor, the sensing element may be formed within the sensor cap or may be bonded to the sensor cap.

The fluorescence sensor may further comprise a space between the distal end of the optical light guide and the proximal end of the sensing element, wherein the optical light guide is bonded to the sensor cap.

The fluorescence sensor may further comprise a bond layer between the distal end of the optical light guide and the proximal end of the sensing element, the bond layer comprising at least one of silica, glass or silicate containing lithium, potassium or sodium.

In the fluorescence sensor, the protective sheath may have a similar coefficient of thermal expansion as the optical light guide.

In the fluorescence sensor, the protective sheath may be bonded to the optical light guide to define a cavity.

In the fluorescence sensor, the cavity may retain an inert gas or a vacuum.

In the fluorescence sensor, the sensing element may be coated with a coating of glass or silica or a silicate coating.

In the fluorescence sensor, the optical light guide may comprise one or more high numerical aperture optical fibers.

In the fluorescence sensor, the optical fibers may comprise a germanium doped silica core and a fluorosilica-doped silica cladding.

In the fluorescence sensor, the optical fibers may be heat formed into an unstressed shape with one or more bends.

The present technology is directed to:
- a fluorescence time decay sensing apparatus, more specifically a temperature sensing apparatus;
- a method of synthesizing the fluorescent sensor element; and
- a method of manufacturing the apparatus by bonding a crystalline or polycrystalline fluorescent sensor element to the end of an optical fiber.

The method of making multiple apparatus by fine tuning the time-decay versus temperature response of a batch of fluorescent sensor elements via the following steps:
- mixing a batch of fluorescent materials,
- acquiring samples from the batch,
- solidifying the samples,
- testing the samples in order to determine whether a majority of the samples would fall within the parameters of a predetermined accuracy bin value,
- adjusting the batch materials based on the pre-test results by adding more materials to the batch and mixing it,
- acquiring new samples from the batch,
- solidifying the new samples,
- testing the new samples in order to determine whether a majority of the samples would fall within the parameters of the predetermined accuracy bin value,
- repeating the above steps until a majority of the test samples fall within the parameters of the predetermined accuracy bin value, and
- solidifying the whole batch.

A purpose of this method is to fine tune the time-decay versus temperature response of a batch of fluorescence sensor elements in accordance with the steps above.

The present technology is also directed to a method of making the apparatus by bonding a sintered phosphor disc or crystal to the end of an optical fiber, retaining it in close intimate contact, and protecting it from the chemical environment.

### FIGURES

Figure 1 is an embodiment of the temperature sensor of the present technology.
Figure 2 is another embodiment of the temperature sensor of the present technology.
Figure 3 is another embodiment of the temperature sensor of the present technology.
Figure 5 is another embodiment of the temperature sensor of the present technology.
Figure 6 is another embodiment of the temperature sensor of the present technology.
Figure 7 is another embodiment of the temperature sensor of the present technology.
Figure 8 is another embodiment of the temperature sensor of the present technology.
Figure 9 is a sensing element in a sensor cap during manufacturing and testing.
Figure 10 shows a sensing element coated with a transparent silica, silicate or glass coating.
Figure 11 is a schematic of a sheet of sensor material and discs.
Figure 12 is a histogram of grouped bins.
Figure 13 is a schematic of the apparatus of the present technology.

### DESCRIPTION

Except as otherwise expressly provided, the following rules of interpretation apply to this specification (written description and claims): (a) all words used herein shall be construed to be of such gender or number (singular or plural) as the circumstances require; (b) the singular terms "a", "an", and "the", as used in the specification and the appended claims include plural references unless the context clearly dictates otherwise; (c) the antecedent term "about" applied to a recited range or value denotes an approximation within the deviation in the range or value known or expected in the art from the measurements method; (d) the words "herein", "hereby", "hereof", "hereto", "hereinbefore", and "hereinafter", and words of similar import, refer to this specification in its entirety and not to any particular paragraph, claim or other subdivision, unless otherwise specified; (e) descriptive headings are for convenience only and shall not control or affect the meaning or construction of any part of the specification; and (f) "or" and "any" are not exclusive and "include" and "including" are not limiting. Further, the terms "comprising," "having," "including," and "containing" are to be construed as open-ended terms (i.e., meaning "including, but not limited to,") unless otherwise noted.

Recitation of ranges of values herein are merely intended to serve as a shorthand method of referring individually to each separate value falling within the range, unless otherwise indicated herein, and each separate value is incorporated into the specification as if it were individually recited herein. Where a specific range of values is provided, it is understood that each intervening value, to the tenth of the unit of the lower limit unless the context clearly dictates otherwise, between the upper and lower limit of that range and any other stated or intervening value in that stated range, is included therein. All smaller sub ranges are also included. The upper and lower limits of these smaller ranges are also included therein, subject to any specifically excluded limit in the stated range.

Unless defined otherwise, all technical and scientific terms used herein have the same meaning as commonly understood by one of ordinary skill in the relevant art. Although any methods and materials similar or equivalent to those described herein can also be used, the acceptable methods and materials are now described.

### Definitions:

Phosphor powder - in the context of the present technology a phosphor powder is a combination of at least one host and at least one dopant, in other words, it is a doped host which absorbs energy from incident light at certain wavelengths and emits light at other wavelengths.

Fluorescent material - in the context of the present technology, fluorescent materials are comprised of phosphor powder(s) and filler(s).

Fluorescence sensor element - in the context of the present technology a fluorescence sensor element is one of a monocrystalline solid, polycrystalline solid, or a polycrystalline nanocomposite of either a mixture of phosphor powder and glass or phosphor powder.

Monocrystalline solid - in the context of the present technology a monocrystalline solid is a sintered fluorescent crystal of phosphor powder. It has grain sizes larger than about 100 microns, but typically understood to be without any grain boundaries. The monocrystalline solid ideally shall have greater than about 90% solid density.

Polycrystalline solid - in the context of the present technology a polycrystalline solid is a sintered phosphor powder which results in a polycrystalline structure with grain sizes in the range of about 10 nanometers to about 100 microns. The polycrystalline solid ideally shall have greater than about 90% solid density.

Polycrystalline nanocomposite - in the context of the present technology a polycrystalline nanocomposite is a sintered fluorescent material (phosphor powder and at least one filler) which results in a polycrystalline structure with grain sizes in the range of about 10 nanometers to about 100 microns. The polycrystalline nanocomposite ideally shall have greater than about 90% solid density.

High Pressure - in the context of the present technology, high pressure is at least about 5 tons per square inch, but preferably about 100 tons per square inch.

Controlled atmosphere - in the context of the present technology, a controlled atmosphere is one of an inert gas atmosphere, an oxygen atmosphere or a vacuum.

### The Apparatus

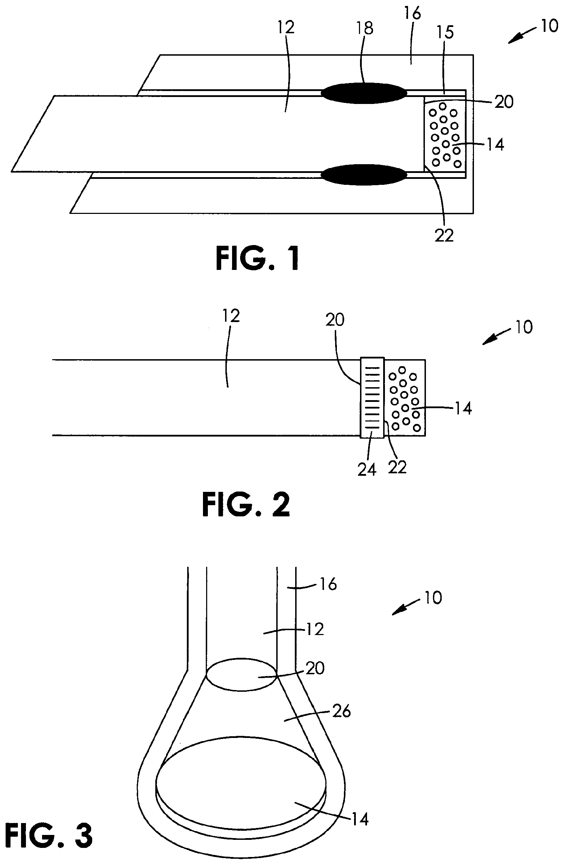

Figure 1 shows an embodiment of a fluorescent temperature sensor for high temperature applications, generally referred to as 10. It includes an optical light guide 12 which may be a silica optical fiber, a sensing element 14 and a protective sheath 16, which preferably is opaque and does not need to be transparent. The protective sheath 16 is preferably a sealed end fused silica tube having the same or similar coefficient of thermal expansion as the optical light guide 12. The protective sheath is melt bonded at a melt bond 18 to the light guide 12 to define a cavity 15 in which at least the sensing element 14 is housed. The cavity 15 retains an inert gas or a vacuum. The sensing element 14 may have any shape, such as, but not limited to a small disc sized to fit on the distal end 20 of the optical light guide 12 at the proximal end 22 of the sensing element 14. Without being bound to theory, the disc has a thickness of about 50 microns to about 1000 microns in order to maximize thermal conductivity through the disc, minimize thermal gradients across the disc, and maximize absorption and emission of the fluorescent signal. In one embodiment, the sensing element 14 is a polycrystalline solid. In another embodiment, the sensing element 14 is a polycrystalline nanocomposite. In all embodiments, the sensing element 14 is capable of withstanding temperatures above about 350 degrees Celsius while producing a monotonic time-decay response with respect to temperature over a suitable range of temperatures. Without being bound to theory, the cavity 15 creates a controlled environment for the sensing element which is desirable because at high temperatures oxidation occurs which can lead to dopant ion charge migration and hysteresis. The cavity 15 is very small (in the order of a few microns) hence there is no need to bond or otherwise attach the sensing element 14 to the optical light guide 12. This reduces the number of steps in manufacturing the fluorescent temperature sensor 10.

As shown in Figure 2, in another embodiment of the fluorescent temperature sensor 10, there is a glass bond layer 24 between the distal end 20 of the optical light guide 12 and the proximal end 22 of the sensing element 14. The glass bond material has a similar or lower melting temperature than the light guide 12 or sensor element 14 and aids in fusion of the distal end 20 of the optical light guide 12 to the proximal end 22 of the sensing element 14. This layer 24 may contain the same filler material used to create a polycrystalline nanocomposite sensing element 14 but can also be any solid, substantially transparent glass material that forms a mechanical bond between the sensing element 14 and optical light guide 12. Example glass bond layer 22 materials, may include, but are not limited to borosilicate glass, specialty silica containing glass formulations, or a liquid glass such as potassium silicate, lithium silicate, sodium silicate or a combination thereof.

As shown in Figure 3, the sensing element 14 has a larger diameter than the optical light guide 12. In this embodiment, there is a space 26 between the distal end 20 of the optical light guide 12 and the sensing element 14. The distance between the distal end of the optical light guide 12 and the sensing element 14 and the diameter of the sensing element 14 are preferably calculated to match with the numerical aperture of the optical light guide 12 such that the cone of light emitted from the optical light guide 12 is focused on the sensor element 14. One advantage of this embodiment is avoiding the need for an intermediate bond layer while maximizing the optical signal.

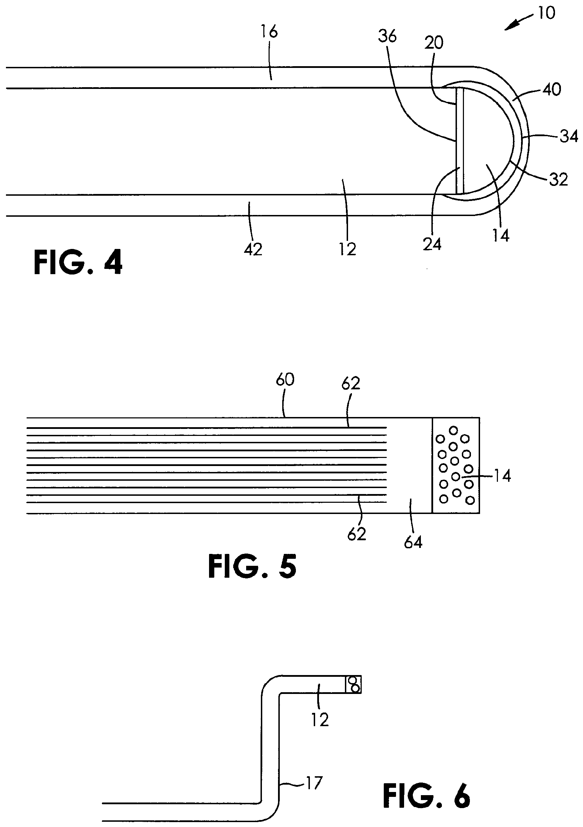

As shown in Figure 4, in another embodiment of the fluorescent temperature sensor 10, the sensing element 14 is a monocrystalline solid crystal and is affixed to the distal end 20 of the optical light guide 12 with or without a glass bond layer 24. The sensing element 14 may have a hemispherical shape as shown or a disc shape as shown in Figure 2 where the outer surface 32 of the sensing element 14 may be either polished or ground. Without being bound to theory, grinding the outer surfaces enhances back scattering of excitation light within the sensor element 14 thereby improving its absorption and emission intensity. A reflective surface coating 34 may also be applied to the outer surface 32 to help trap the light within the sensor element 14 and further improve its absorption and emission intensity. The distal end 20 of the optical light guide 12 has a polished surface 36. The proximal end 38 of the sensor element 22 also has a polished end. The protective sheath 16 can have a thinner end wall 40 for faster response time, but a larger thickness side wall 42 extending backwards which helps to protect the fragile optical light guide 12. For high temperature applications, the protective sheath 16 may be a glass such as fused silica, a ceramic such as alumina, or a metal such as Inconel^{®}. For lower temperature applications the protective sheath may be a polymer coating such as Teflon^{®}.

As shown in Figure 5, when a more flexible probe construction is required, a bundle 60 of smaller diameter optical fibers is used. The individual optical fibers 62 typically have a diameter in the range of about 40 microns to about 200 microns. In this case a bundle 60 of borosilicate or silica optical fibers 62 may have a diameter of about 1000 microns and has a fused distal end 64 and the sensing element 14 affixed as discussed above.

Without being bound to theory, the bundle of optical fibers has the advantage of accommodating smaller bend radii while delivering more light to the sensing element 14 than a single optical fiber having the same minimum bend radius.

In order to increase the optical signal further, in an embodiment, a larger 1000 microns diameter optical fiber may be formed into a final shape with applicable bends. Heat is applied to the optical fiber and bends are made with a large enough radius to avoid light loss through the bends. The pre-forming step is done to reduce bending stress in the optical fiber which could result in breakage over time or if subject to rapid temperature change. In this case a higher numerical aperture optical fiber is also desired to accommodate smaller bend radii without signal loss.

As shown in Figure 6, the light guide 12 is a heat-formed optical fiber with high numerical aperture (NA). Standard commercial grade silica optical fiber for high temperature applications has a typical NA of 0.22 which limits its light acceptance angle and limits its minimum bend radius. It is desired to use germanium doped silica core fiber where the NA is increased to about 0.37 or higher resulting in improved optical signal and smaller bend radii. The diameter of the optical fiber is about 200 microns to about 1000 microns and the germanium doped silica core is typically clad with a fluorosilica doped silica cladding 17. Heat forming the light guide followed by an annealing step allows complex bends to be formed, while eliminating the bending stresses which could lead to breakage in higher temperature applications.

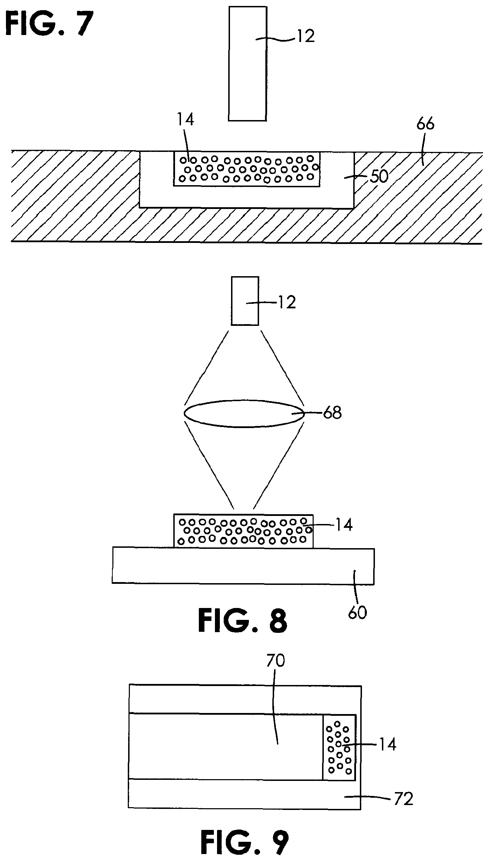

As shown in Figure 7, in an alternative embodiment, the sensing element 14 is attached to a sensing target 50 to be sensed and is illuminated by the light guide 12 some distance away from the target 50. The sensing target 50 may be individually tested for accuracy as part of the manufacturing process and prior to installation onto a surface 66 to be measured. In another embodiment shown in Figure 8, a lens system 68 is located between the optical light guide 12 and the sensing element 14 which is bonded to an object 66. One or more optical lenses 68 may also be employed between the distal end of the optical light guide 12 and sensing element 14 to further extend the distance between the light guide 12 and sensing element 14 in remote sensing applications. In this way the temperature of the object 66 may be very high, but the lenses and optical light guide 12 may remain at much lower temperatures because they are located further away.

As shown in Figure 9, in an embodiment, the sensing element 14 is made of phosphor powder and at least one filler, which is pressed and sintered into a polycrystalline solid or polycrystalline nanocomposite, within the cap 72. Manufactured in this manner, caps 72 can be individually tested for accuracy before being assembled into a fluorescent temperature sensor 10. The distal region 70 can house an optical light guide 12 that is temporarily inserted during testing of the sensor cap.

In an embodiment, the sensing element 14 comprises a fluorescent polycrystalline solid or polycrystalline nanocomposite, material. The polycrystalline solid or polycrystalline nanocomposite contains host crystal material, a dopant, and a filler material. Table 1 shows examples of host crystals, dopants, and filler materials. The polycrystalline solid or polycrystalline nanocomposite material may contain any combination of host crystals, dopants, and filler materials, such as those listed in Table 1.

For example, in an embodiment, the phosphor powder portion of the polycrystalline solid or polycrystalline nanocomposite material may contain any combination of any host crystal listed in Table 1 (or any other host crystal material known in the art) and one or more of the dopants listed in Table 1 (or any other dopants known in the art), for example YAG:Er and YAG:Nd. Also, for example, in an embodiment, the filler material portion of the polycrystalline solid or polycrystalline nanocomposite may contain any of the filler materials listed Table 1 (or any filler material known in the art).

In an embodiment, the relative quantity of filler material with respect to the other materials may be about 0.1% to about 10% by weight of the total amount of materials.

In an embodiment, the particle shape of the filler material may be in the form of microspheres or randomly ground powder. The size of the particles may be from about 10 nanometers to about 10 microns.

In an embodiment, the filler material may be an un-doped host crystal as noted in Table 1. In another embodiment, the filler material may be a doped host crystal as noted in Table 1.

In an embodiment, specialty glass is a custom formulated glass with a lower melting point than the host crystal.

Various factors are considered when selecting filler material such as its thermal conductivity, its chemical compatibility with the doped host crystal, its susceptibility to oxidation and ion charge migration, its effect on time-decay response, and its useful operating temperature range. In addition, in order to maximize the optical signal, the filler material ideally is selected to be optically transparent in the excitation and absorption wavelengths of the doped host crystal.

Another consideration is the chemical compatibility of the filler material with the operating environment into which the sensor may be deployed. Inertness is important because at high temperatures the host crystal may absorb gas molecules from the environment into its crystal lattice, thereby altering its time-decay response. The addition of a nanoparticle filler material in combination with high densification can significantly reduce this effect.

In addition, ion charge migration may occur within the crystal lattice either as result of elevated temperatures or long-term exposure to incident light energy at specific wavelengths. For instance, the quantity of Er3+ versus Er2+ ions changes over temperature and with incident light intensity within a YAG crystal lattice. This changes the fluorescent time-decay response of the host crystal and leads to irreversible drift and hysteresis over time. In order to stabilize this behavior, an oxygen containing filler material is selected to provide additional oxygen ions to the crystal lattice and keep the Erbium in the Er3+ state.

**Table 1:**

| **Suitable Materials for Fluorescent Time-Decay Temperature Sensing** | | |
|---|---|---|
| **Host Crystal** | **Dopant** (one or more) 0.1% to 20% | **Filler Material** Particle Size: 10nm to 10µm |
| YSO | Ce | SiO₂ |
| YSZ | Cr | Borosilicate Glass |
| Y₂O₃ | Dy | Specialty Glass* |
| YVO₄ | Er | Diamond |
| YAG | Eu | Undoped Host Crystal |
| YAP | Gd | YSO |
| YAM | Ho | YSZ |
| YGG | Mn | Y₂O₃ |
| Al₂O₃ | Nd | YVO₄ |
| La₂O₂S | Pr | YAG |
| Gd₂O₂S | Sm | YGG |
| Mg₂TiO₄ | Tb | YAP |
| 3.5MgO 0.5MgF₂ GeO₂ | Ti | YAM |
| Mg₄FGeO₆ | Tm | Al₂O₃ |
| K₂SiF₆ | Yb | La₂O₂S |
| | | Gd₂O₂S |
| | | MgO |
| | | GeO₂ |
| | | TiO₂ |
| | | MgF₂ |

| | | |
|---|---|---|
| * Specialty glass formulations can be custom tailored for higher or lower melting points, clarity, and coefficients of thermal expansion to match the host crystal material and improve the overall fluorescent efficiency. | | |

In the preferred embodiment, silicon dioxide is added at a concentration of about 0.1% to about 10% (see Table 2). The particle size is about 10 nanometers to about 10 microns. Without being bound to theory, the addition of a small quantity of silicon dioxide to the crystal lattice of various phosphor powders or crystals serves to prevent ion charge migration within the crystal lattice, thus stabilizing its absorption and emission wavelengths and allowing its time-decay versus temperature response to be more accurate and repeatable. The silicon dioxide may be doped with at least one of Ce, Cr, Dy, Er, Eu, Gd, Ho, Mn, Nd, Pr, Sm, Tb, Ti and Yb to further enhance fluorescent efficiency.

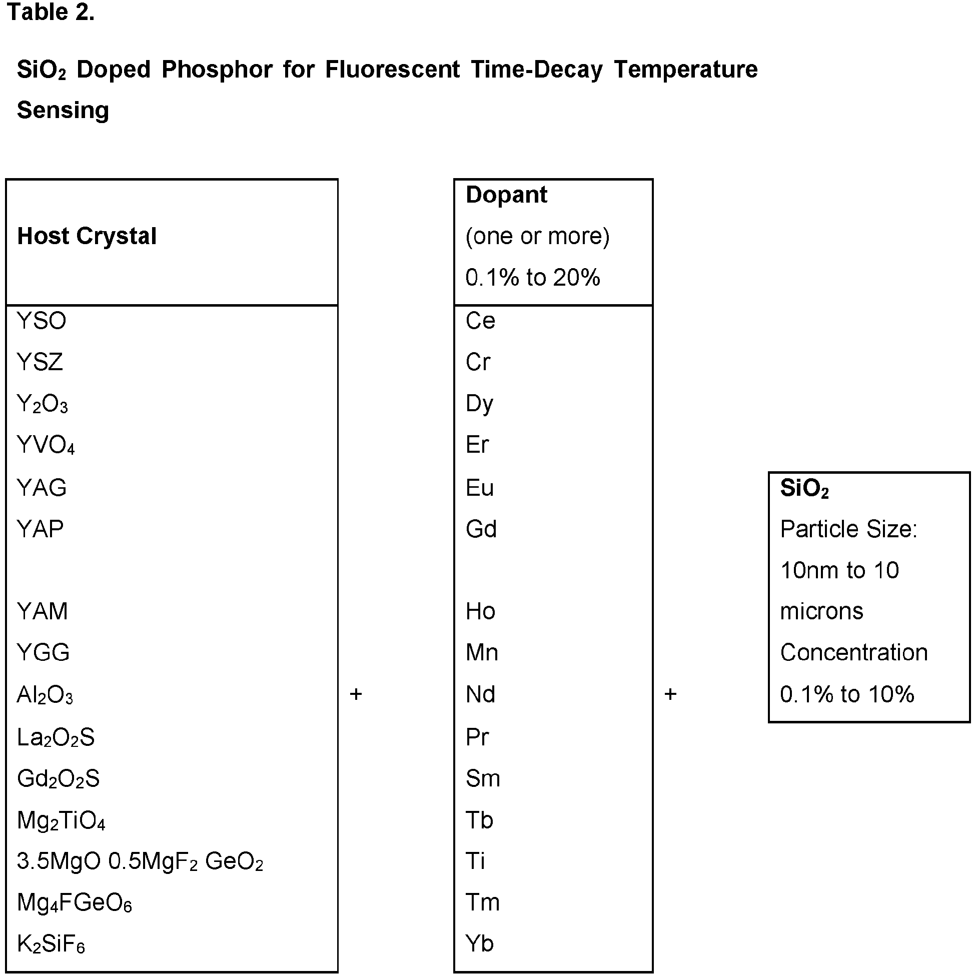

The method of producing a polycrystalline nanocomposite fluorescent sensor element for is as follows:
a) a phosphor powder of uniform particle size is first produced;
b) powdered filler material is uniformly mixed with the phosphor powder;
c) the mixture is compacted into a near solid density under high pressures (at least about 5 tons per square inch) to produce a polycrystalline nanocomposite green body;
d) the green body is sintered in a controlled atmosphere at high temperatures to produce a sintered polycrystalline nanocomposite object;
e) optionally, the sintered polycrystalline nanocomposite object is then annealed for a time in normal atmosphere at slightly lower temperatures to provide an annealed, sintered polycrystalline nanocomposite object;
f) a multitude of sensor elements are machined from the annealed, sintered polycrystalline nanocomposite object.
g) optionally, the nanocomposite crystal object is ground into a powder of substantially uniform particle size and steps a) through f) are repeated to produce a more homogeneous polycrystalline nanocomposite object. The preferred particle size is about 1µm to about 25µm. This nanocomposite powder may also be used for manufacturing a fluorescent sensor using other methods known in the art.

In some embodiments, the sensor element 14 is a semi-transparent polycrystalline solid. Without being bound to theory, the advantage of a polycrystalline solid over a monocrystalline solid is that grain boundaries in the polycrystalline structure help to trap light within the sensor which increases the absorption and emission intensity. The multiple grain boundaries may also help to distribute internal stresses, reduce ion charge migration and produce a more stable sensor element with less hysteresis. The method of producing a polycrystalline sensor element is as follows:
a) a phosphor powder of uniform particle size is first produced;
b) the powder is compacted into a near solid density under high pressures (at least about 5 tons per square inch) to produce a green body;
c) the green body is sintered in a controlled atmosphere at high temperatures to provide a sintered polycrystalline solid (note that sintering for an even longer time would result in a monocrystalline solid as the individual crystal grains grow larger over time);
d) optionally, the sintered polycrystalline solid is then annealed for a time in normal atmosphere at slightly lower temperatures to provide an annealed, sintered polycrystalline solid;
e) a multitude of sensor elements are machined from the annealed, sintered polycrystalline solid.

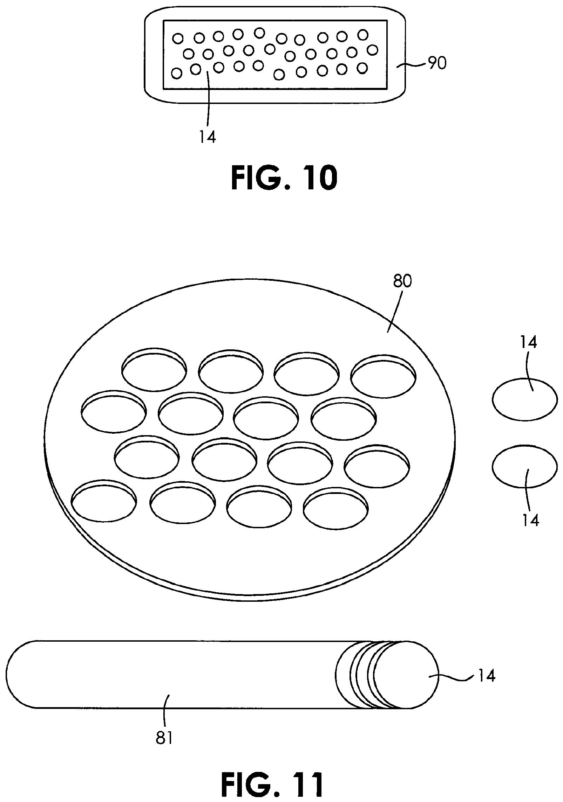

Figure 10 shows a fluorescent sensor element 14 encapsulated with a glass coating 90 to protect it from external atmosphere. The glass coating 90 may be any glass including fused silica, borosilicate glass, or a silicate for example. Such a coating is applied to prevent chemical attack, oxidation, and humidity from affecting the fluorescent sensor element 14, and is particularly important if the sensor element is more porous and less dense.

In another embodiment, the fluorescent sensor element 14 may be used in any application where fluorescence time-decay is measured, for example, but not limited to pressure, oxygen, pH, or moisture sensing.

### Method of Making Multiple Apparatus

The present technology is directed to a method of making multiple apparatus by fine tuning the time-decay versus temperature response of a batch of fluorescent sensor elements via the following steps:
a) mixing a batch of fluorescent material (for example, host crystals, dopants and fillers)
b) acquiring samples from the batch,
c) solidifying the samples,
d) testing the samples in order to determine whether a majority of the samples would fall within the parameters of a predetermined accuracy bin value,
e) adjusting the batch materials based on the first test results by adding more materials to the batch and mixing it,
f) acquiring new samples from the batch,
g) solidifying the new samples,
h) testing the new samples in order to determine whether a majority of the samples would fall within the parameters of the predetermined accuracy bin value,
i) repeating the above steps until a majority of the test samples fall within the parameters of the predetermined accuracy bin value, and
j) solidifying the whole batch.

An objective of this method is to maximize the number of sensing elements produced that fall into a predetermined accuracy bin value.

A large batch may be produced and thoroughly mixed. Small samples from this batch are then processed and tested and the batch is adjusted by means noted above until a majority of the test samples fall within the parameters of a particular accuracy bin.

The sensing element may be manufactured in a variety of ways. Figure 11 illustrates disc shaped sensing elements 14 punched out of sheets 80 or cut from rods 81 of the sintered material. The sheets may have any desired thickness, for example from about 50 microns to about 1000 microns. The rods 81 may have any desired diameter, for example from about 200 microns to about 1000 microns.

In an embodiment, the step of solidifying the samples may be performed by baking, curing, drying or sintering, for example.

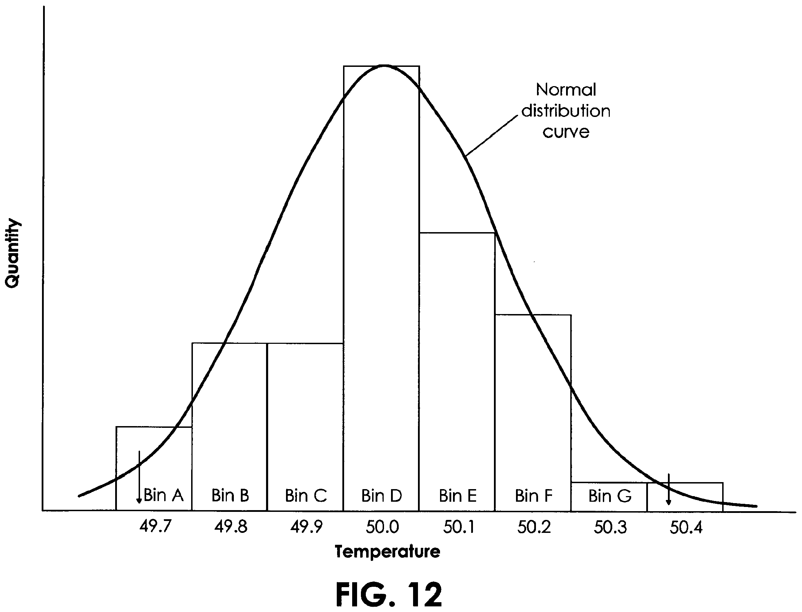

The fluorescent sensor elements are sorted and binned according to their time-decay response versus temperature, as illustrated in Figure 12. It is desirable to be able to sort and bin the resultant sensor elements 14 prior to full assembly with an optical light guide in order to improve yield and minimize the cost of scrap materials.

In another embodiment, the final batch of fluorescent material is deposited into a sensor cap or onto a target substrate and then solidified, hence the sensor element 14 is formed within the sensor cap.

### Correcting Batch-to-Batch Variations

In an embodiment, the method produces sensor elements after the original batch which have the same calibration accuracy as the original batch of sensor elements.

Because of process variations during manufacturing, each batch of bulk phosphor powder inevitably has slightly different time-decay versus temperature characteristics. This is undesirable because it means that fluorescent sensor elements produced with each new batch behave differently. For example, at a given temperature they may have a different time-decay than a previous batch and therefore must be calibrated differently. Calibrating individual sensors is inefficient and not practical. Therefore, a method is needed to adjust each new batch of bulk fluorescent material to match the performance characteristics from the previously produced batch.

In an embodiment, the method described below for fine tuning a batch of fluorescent material is used to correct batch-to-batch variability in the production of the bulk phosphor powder. By producing more than one batch of phosphor powder with different particle size and dopant concentrations, and sampling and adjusting the batch, a new batch can be fine-tuned to behave with the same fluorescent time-decay versus temperature characteristics as a previously produced batch. In this manner, sensors elements are produced over time with the same calibration accuracy as the original batch.

### Example Method

Referring to Figure 12, in an embodiment, a sensing element is manufactured in accordance with the following iterations of steps with the goal of maximizing the number of sensing elements produced that fall into bin D:
providing and mixing a batch of fluorescent materials; and
selecting a predetermined accuracy bin value representing a desired time-decay versus temperature response with a pre-defined error margin.

### Sample Test 1

acquiring a first sample from the batch;
solidifying the first sample and producing a first set of sensor elements;
testing the first set of sensor elements to form the first test results;
recording the statistical distribution of the first test results;
comparing the first test results with the predetermined accuracy bin value; and
adjusting the batch of fluorescent materials based on the pre-test results by adding more materials to the batch and mixing it.

### Sample Test 2

acquiring a (second) sample from the adjusted batch;
solidifying the sample and producing a second set of sensor elements;
testing the second set of sensor elements to form the second test results;
recording the statistical distribution of the test results;
comparing the second test results with the predetermined accuracy bin value;
determining whether a majority of sensor elements now fall into the desired bin (for example bin D in Figure 12); and
solidifying the whole batch of fluorescent material if a majority of sensor elements fall into the desired bin.

Batch adjustments are made to correct for both offset and slope errors. Offset adjustments occur when the time-decay versus temperature response needs to be corrected in one direction and is a uniform offset applied across the entire temperature sensing range.

Slope adjustment is required to correct for changes in time-decay versus temperature behavior over a range of temperatures where the offset at lower temperatures is different from the offset at higher temperatures.

### Making a Batch Offset Adjustment

Batch adjustment to correct for offset error is accomplished by any combination of the following means:
adding more phosphor powder of the same chemical composition but with a larger particle size to shift the temperature response lower;
adding more phosphor powder of the same chemical composition but with a smaller particle size to shift the temperature response higher;
adding less filler material to shift the temperature response lower; and
adding more filler material to shift the temperature response higher.

The filler material is commonly an inorganic transparent powder such as a glass or crystal material of similar or smaller particle size as the phosphor powder.

### Making a Batch Slope Adjustment

Batch adjustment to correct for slope error requires adding more material of a different dopant concentration. For instance:
adding more phosphor powder of the same bulk chemical composition but with a higher dopant concentration may shift the slope more positively such that it reads higher at elevated temperatures; and
adding more phosphor powder of the same chemical composition but with a lower dopant concentration may shift the slope more negatively such that it reads lower at elevated temperatures.

In this manner, by adjusting the batch proportions, both offset and slope can be corrected in order to match the current batch time-decay versus temperature characteristic to the original batch time-decay versus temperature characteristic.

An objective of the method is to maximize the number of manufactured sensor elements 14 that fall into bin D. For example, after Sample Test 1, comparing the first test results with the predetermined accuracy bin value, a majority of sensing elements may fall in bin B and bin C. After adjustment and Sample Test 2, a majority of sensing elements may fall in bin C and bin D. After a final adjustment and Sample Test 3, a majority of sensing elements fall in the desired bin D.

In an embodiment, the sensor elements are discs. During the testing step, several discs are selected from the batch and tested to determine the statistical distribution of the batch.

In an embodiment, the method involves testing the samples in order to determine whether a majority of the samples would fall within the parameters of a predetermined accuracy bin value. For example, an accuracy bin value may be 49.95 to 50.05 degrees Celsius. The samples may be tested by placing them in a precision drywell calibrator and setting the reference temperature to 50.00 degrees Celsius. A fiber optic light guide is placed in contact with each sample and its temperature is measured and recorded in a spreadsheet. A statistically meaningful number of samples are tested -- for example, a quantity of twenty sensor elements. A histogram is produced in the spreadsheet showing the temperature distribution of the samples. This distribution is typically gaussian in nature and will have a peak about which most of the samples read. This peak-value is then compared to the calibration reference temperature of 50.00 degrees Celsius. By subtracting the reference temperature from the gaussian peak temperature, an offset error value is determined. This offset error value is the offset that needs to be corrected through the batch adjustment process.

The following examples illustrate examples of batch adjustment via offset tuning and batch adjustment via slope tuning.

Offset Example: For example, in an embodiment, where the reference temperature is 50.00 degrees Celsius, if the Gaussian peak time-decay corresponds to a temperature of 49.50 degrees Celsius, then the batch would need to be adjusted to shift the temperature 0.5 degree Celsius higher. This adjustment may be accomplished in different ways, for example, by adding more phosphor material of the same type but with a smaller particle size distribution or by adding a filler material. If adding more phosphor powder of a different particle size, then the amount of material to be added is determined proportionally by the difference in temperature responses of the two batches. If a filler material is added, the amount is determined iteratively and through experience. It may take more than one iteration to adjust the batch to get the gaussian peak temperature to match the reference temperature.

Slope Example: For example, in an embodiment where the reference temperature is 50.00 degrees Celsius, to correct for slope error, a second calibration point may be similarly tested at a higher temperature like 200.00 degrees Celsius. If the gaussian peak near 200.00 degrees Celsius shows an offset error different from the offset error determined at 50.00 degrees Celsius, then a slope adjustment must also be made. This may be accomplished by adding phosphor powder of the same type but of a different dopant concentration. The amount of material to be added is determined proportionally by the difference in slope characteristics of the two batches.

Each bin of sorted sensor elements will have the same accuracy characteristics. The method manufactures multiple sensing elements from the same bin. In an embodiment, the sensor elements may be mass produced in high volumes with repeatable fluorescent time-decay characteristics and maximum yield within the desired accuracy bin. This enables mass production of temperature probes with the desired accuracy.

Figure 12 illustrates a histogram of grouped bins. If a high accuracy probe is desired, sensor elements from bin D are selected. If a lower accuracy is acceptable, sensor elements from the other bins may be selected.

### Adjusting the Batch Materials

The method includes a step of adjusting the composition of the batch materials for adjusting the behavior of the fluorescent material matrix, which adjusts and corrects the time-decay reading from batch to batch (e.g. from Sample Test 1 to Sample Test 2), in two optional ways. The first option is by modifying the density and concentration of the fluorescent powder by adding a filler material to the powder. The second option is by introducing a second, phosphor powder of a different batch but similar chemical composition and adjusting its mix ratio with respect to the first phosphor powder.

### First Option: Adding a Filler Material to Phosphor Powder

In an embodiment, the composition of the batch materials is adjusted by modifying the density and concentration of the powder for example, by introducing an inorganic filler material of similar or smaller particle size to the phosphor powder.

This option shifts the time-decay characteristics of the bulk matrix material. Typically, the higher the density, the longer the time-decay and lower the temperature reading. For example, adding 10% filler material may shift the temperature response higher by 0.2 to 2.0 degrees Celsius depending on phosphor powder.

In an embodiment, the inorganic filler may be a glass powder or a crystalline powder. Glass powders are acceptable for lower temperature operation, while crystalline powders are preferred for higher temperature operation. Examples of such materials are borosilicate glass, fused silica, diamond, YAG, and others.

### Second Option: Adding a second batch of phosphor powder but with a different dopant concentration or particle size to the original phosphor powder

In an embodiment, the composition of the batch materials is adjusted by introducing a second phosphor powder of a different batch but similar chemical composition and adjusting its mix ratio with respect to the first batch phosphor powder.

The second batch material may be made with an average particle size which is greater or lesser than the first batch. Larger particle size generally results in brighter, more efficient fluorescence and longer time-decay values and lower temperature readings.

The second material may also be doped with a different dopant concentration. For instance, if the fluorescent material is YAG-Er, the concentration of Er can be adjusted from 0.1% to 20% by weight to shift the time-decay response.

### Solidifying the Samples and the Batch

In an embodiment, the method solidifies the samples and subsequently the entire batch by sintering the compacted powdered batch materials in controlled atmosphere environments for predetermined durations of time and within predetermined temperature ranges.

A compacted and sintered phosphor solid has the following advantages:
it is a solid structure that is machinable to any desired shape;
it has high density which increases its stability with respect to degrading gases in high temperature environments;
individual sensor discs cut from it have a more consistent time-decay response because of a more uniform and controlled density throughout the bulk solid; and
its time-decay versus temperature response can be fine-tuned by mixing powder batches with different ratios of bulk powder materials having varying particle size distributions or dopant concentrations.

In an embodiment, the fluorescence sensing element is a phosphor powder-based sensor element that is sintered without the addition of a filler.

In another embodiment, a filler is added to a phosphor powder and mixed to provide a fluorescent material which is then compacted under high pressure into a green object having a solid, rigid shape. The green object is then sintered at high temperatures. The compacted fluorescent material may be sintered in a controlled atmosphere environment. For example, doped YAG sintering may be performed in an inert nitrogen environment or in vacuum. Alternatively, sintering in air with oxygen present maximizes oxygen diffusion into the crystal and reduces the time needed for annealing.

For example, a fluorescent sensor object made from doped YAG may be sintered in a temperature range of about 1500 degrees Celsius to about 1900 degrees Celsius for about 2 to about 24 hours followed by annealing at a lower temperature range of about 800 degrees Celsius to about 1400 degrees Celsius for about 2 to about 48 hours. Annealing is ideally performed in air with oxygen present if the sensor is to operate in an air environment. In the case of doped YAG, annealing by cycling from about 800 degrees Celsius to about 1400 degrees Celsius over many hours or days will improve oxygen saturation and help stabilize ion charge migration which reduces time-decay hysteresis artifacts.

When an oxygen containing filler is added such as silicon dioxide, and sintering is performed in air, the sintering time may be completed in as little as about 2 hours without need for further annealing. The addition of the filler thus also reduces the manufacturing processing time.

The resultant final pressed and sintered product is ideally greater than 90% of the full monocrystalline solid density.

The compacted powder object is sintered at predetermined temperature ranges and durations, which may vary depending on the powder materials. If the sintering time is prolonged, the grain structure will eventually form a monocrystalline solid. In some embodiments this may be desired because a solid crystal is very stable mechanically, however, in the case of materials such as rare-earth doped YAG, sintering to the point of an optically clear monocrystalline solid results in less fluorescent efficiency. The excitation light tends to travel through the crystal material with only a small fraction being absorbed in the crystal lattice. Sintering to a point of only polycrystalline grain structure increases fluorescent efficiency by providing better scattering and absorption of the excitation light resulting in thinner sensor element structures.

In an embodiment filler material is added to the phosphor powder prior to pressing and sintering in order to produce the following beneficial characteristics:
a. Improved densification of the bulk material at a lower overall sintering temperature required to bind the material - this is important since many fluorescent materials degrade irreversibly when exposed to elevated temperatures. There is also a cost and processing time advantage to this.
b. A stronger resultant material matrix is formed which is essentially a ceramic. The stronger material is therefore easier to work with for post machining, polishing, and dicing, etc., without risk of cracking
c. Improved chemical inertness because the filler material coats and further isolates the fluorescent material from the chemical environment
d. Improved ability to fuse and bond to the end of an optical fiber. For instance, a YAG fluorescent powder with SiO₂ additive can be plasma fused to the end of a fused silica optical fiber.
e. Adjusting the percentage of additive can shift the time-decay response to enable fine tuning of the response batch-to-batch as previously noted (or a second inert additive such as diamond powder may also be present to assist this approach).
f. The time-decay behavior of some solid crystal structures is not repeatable with respect to temperature due to ion charge migration affecting fluorescent modes (and the development of reversible color centers) whereas the presence of an additive helps to stabilize the fluorescent response.
g. Finally, additional additive may be easily melted and bonded onto the surface of a sintered and shaped sensor element to further protect it from the surrounding chemical environment and/or aid in bonding to a substrate or optical fiber as in Figure 10.

In an embodiment, rare earth doped YAG phosphor powder (without a filler) may be sintered into a solid structure and diced into a disc shape.

The pressed shape of the solid structure can be a plate or a rod. Sintering can be done to partial polycrystalline formation or complete single crystal formation in the solid structure. The solid structure is then machined or diced into the desired sensor element shape (e.g. disc).

In an embodiment the glass-phosphor powder matrix is mixed to provide a fluorescent material which is deposited and/or pressed under high pressure (at least about 5 tons per square inch) (compacted) into a cap or onto a target substrate. The high temperature sintering and annealing process is then conducted on the cap or target assembly. In this way, the sintered material also forms a mechanical bond with the cap or the target substrate. In an embodiment, the filler material is added to lower the sintering temperature of the mixture. For example, lower melting temperature glass powders with melting points around 700°C may be used with magnesium fluorogermanate phosphors to produce fluorescent sensor elements with working temperatures up to 600°C.

In an embodiment, filler powder particle size is similar in size or smaller than the phosphor particle size. Nanoparticle fillers and nanoparticle phosphors may be used.

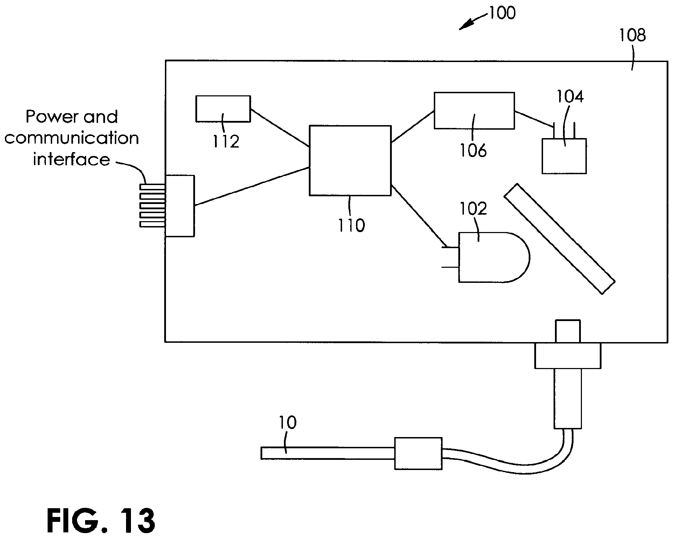

As shown in Figure 13, the fluorescent temperature sensor 10 is part of a phosphor thermometry apparatus, generally referred to as 100. It includes a light source 102, a light detector 104, which may be for example, but not limited to a photodetector, an analogue to digital converter 106, a printed circuit board 108, which includes a microprocessor 110 and a memory 112. The memory 112 has instructions thereon to instruct the processor to determine temperature based on the optical signal from the fluorescent sensor element, which is then transmitted from the printed circuit board 108 as an electronic digital signal.

While example embodiments have been described in connection with what is presently considered to be an example of a possible most practical and/or suitable embodiment, it is to be understood that the descriptions are not to be limited to the disclosed embodiments, but on the contrary, is intended to cover various modifications and equivalent arrangements included within the spirit and scope of the example embodiment. Those skilled in the art will recognize or be able to ascertain using no more than routine experimentation, many equivalents to the specific example embodiments specifically described herein. Such equivalents are intended to be encompassed in the scope of the claims, if appended hereto or subsequently filed.

## Claims

1. A method of manufacturing a plurality of apparatuses by fine tuning the time-decay versus temperature response of a batch of fluorescent temperature sensor material, the method comprising:
providing a predetermined accuracy bin value;
mixing a batch of the fluorescent temperature sensor materials;
acquiring samples from the batch;
solidifying the samples;
testing the samples in order to determine bin value for each of the samples to obtain a test result;
comparing the test results for each of the samples with the predetermined accuracy bin value;
determining whether a majority of the samples fall within the predetermined accuracy bin value;
if a majority of the samples do not fall within the predetermined accuracy bin value adjusting the batch materials based on the test results by adding more materials to the batch and mixing it to provide a new batch;
acquiring new samples from the new batch;
solidifying the new samples;
testing the new samples in order to determine bin values for each of the new samples;
comparing the bin values for each of the new samples with the predetermined accuracy bin value;
determining whether a majority of the new samples would fall within the predetermined accuracy bin value;
if a majority of the new samples do not fall within the predetermined accuracy bin value, further adjusting the batch materials based on the test results by adding more materials to the batch and mixing it;
repeating the above steps until a majority of the new samples fall within the predetermined accuracy bin value; and
solidifying a whole batch when the majority of the test samples fall within the predetermined accuracy bin value.

2. The method of claim 1, wherein the step of adjusting the batch materials comprises one or more of: adding a filler material to the phosphor powder;
or adding a second batch of phosphor powder with a different dopant concentration;
or adding a second batch of phosphor powder with a different particle size to the original phosphor powder.

3. The method of claim 2, wherein the step of adjusting the batch materials comprises adding one or more of the following materials to the batch:
a phosphor powder of the same chemical composition with a larger particle size;
a phosphor powder of the same chemical composition with a smaller particle size;
a filler material;
a phosphor powder of the same bulk chemical composition but with a higher dopant concentration;
and a phosphor powder of the same chemical composition but with a lower dopant concentration.
